# EUROPÄISCHE PATENTSCHRIFT

(11) **EP 1 065 521 B1**
(45) Veröffentlichungstag und Bekanntmachung des Hinweises auf die Patenterteilung: **09.03.2005**
(21) Anmeldenummer: 00113253.9
(22) Anmeldetag: 21.06.2000
(51) Int. Cl.: G01S 17/02, G01S 17/89, G01S 7/48

(54) **Optoelektronisches Überwachungssystem**
Optoelectronic surveillance system
Système de surveillance optoélectronique

(30) Priorität: 30.06.1999 DE 29911390 U
(43) Veröffentlichungstag der Anmeldung: 03.01.2001
(73) Patentinhaber: Sick AG, 79183 Waldkirch, Breisgau (DE)
(72) Erfinder: Bauer, Robert Dr., 79312 Emmendingen (DE); Wüstefeld, Martin, 79350 Sexau (DE)
(74) Vertreter: Manitz, Finsterwald & Partner GbR

(56) Entgegenhaltungen:
- EP-A- 0 902 402
- US-A- 5 326 028
- US-A- 5 621 529
- MINORU MARUYAMA ET AL: "RANGE SENSING BY PROJECTING MULTIPLE SLITS WITH RANDOM CUTS" IEEE TRANSACTIONS ON PATTERN ANALYSIS AND MACHINE INTELLIGENCE,US,IEEE INC. NEW YORK, Bd. 15, Nr. 6, 1. Juni 1993 (1993-06-01), Seiten 647-651, XP000369964 ISSN: 0162-8828

## Beschreibung

Die vorliegende Erfindung betrifft ein optoelektronisches Überwachungssystem zur Erfassung eines zu überwachenden Raumbereichs.

Es ist häufig wünschenswert, kontrollieren zu können, ob sich in einem bestimmten Raumbereich Personen, Gegenstände oder sonstige Objekte befinden. Daneben besteht ein Bedürfnis, insbesondere in sicherheitsrelevanten Überwachungsbereichen, wie z.B. dem Eingangsbereich eines Aufzuges, aus Gründen des Personenschutzes die korrekte Position von Personen oder Gegenständen zu ermitteln.

Es ist grundsätzlich bekannt, zu derartigen Kontroll- oder Sicherungszwecken automatische Sensorsysteme zu verwenden. So ist beispielsweise aus der Druckschrift EP 902 402 A2 ein optisches Überwachungssystem bekannt, bei dem in einem bestimmten Raumbereich mit einer Kamera ein digitales Bild erzeugt wird und die Grauwerte des aktuellen Bildes mit den Grauwerten eines Referenzbildes in einer Auswerteeinheit pixelweise verglichen und das Ergebnis ausgewertet wird.

Dieses und andere herkömmliche Überwachungssysteme haben jedoch den Nachteil, daß lediglich der Boden oder der bodennahe Bereich des überwachenden Raumes erfaßt werden kann. Ein weiterer Nachteil herkömmlicher Überwachungssysteme besteht darin, daß die Kamera und die Lichtquelle voneinander beabstandet und in einem bestimmten Winkel zueinander angeordnet sein müssen, was Verbindungsleitungen sowie eine exakte und damit aufwendige Installation der einzelnen Bauteile erforderlich macht. Die bekannten Überwachungssysteme haben ferner den Nachteil, daß dabei der Boden des zu überwachenden Bereiches auf einfache Weise flächig ausgeleuchtet wird, so daß aufgrund der vielfachen Reflexionsmöglichkeiten die Zuverlässigkeit der Überwachungsfunktion beeinträchtigt wird.

Andere bekannte Überwachungssysteme beleuchten den zu überwachenden Raumbereich lediglich mit einer einfachen geraden Linie, die parallel zu der Verbindungsachse zwischen der Lichtquelle und der Kamera verläuft. Mit einer solchen Beleuchtung ergibt sich bei konturschwachen Oberflächen oder ebenen Gegenständen in ungünstigen Situationen keine ausreichende Änderung des Reflexionsbildes, wenn dabei der Lichtschnitteffekt, d.h. die Veränderung des von der Kamera erfaßten Bildes, die dazu gegenüber der Lichtquelle in einem bestimmten Winkel angeordnet sein muß, zu gering ausfällt oder nicht sichtbar ist.

Es ist daher die Aufgabe der vorliegenden Erfindung, ein universell einsetzbares Überwachungssystem zu schaffen, dessen Detektionsfähigkeit verbessert ist und damit seinen Sicherungszweck zuverlässig erfüllt. Eine weitere Aufgabe der vorliegenden Erfindung ist es, ein Überwachungssystem zu schaffen, dessen Schärfentiefe verbessert ist und damit in der Lage ist, den zu überwachenden Raum über den bodennahen Bereich hinaus mit einer größeren Tiefe bzw. den gesamten Raum zu überwachen. Noch eine weitere Aufgabe der vorliegenden Erfindung ist es, ein Überwachungssystem zu schaffen, bei dem kein bestimmter Winkel oder Verbindungsleitungen zwischen der Lichtquelle und der Kamera erforderlich sind.

Zur Lösung dieser Aufgaben wird ein optoelektronisches Überwachungssystem mit den Merkmalen des Anspruchs 1 vorgeschlagen.

Das erfindungsgemäße Überwachungssystem hat den Vorteil, daß durch die Beleuchtung des zu überwachenden Raumbereichs nach einem komplexen Beleuchtungsmuster mit mindestens einer zumindest teilweise von einer Geraden abweichenden Linie Fehlinterpretationen durch die Auswerteeinheit besser vermieden werden und damit die Zuverlässigkeit des Überwachungssystems erhöht wird. Ein weiterer Vorteil des erfindungsgemäßen Überwachungssystems besteht darin, daß durch die Beleuchtung des zu überwachenden Raumbereichs nach einem komplexen Beleuchtungsmuster die in einer Fläche angeordneten Bildpunkte des Bildgebers besser ausgenutzt wird, so daß eine Veränderung oder eine Unregelmäßigkeit im zu überwachenden Raumbereich zuverlässiger erkannt werden kann. Ein weiterer Vorteil des Überwachungssystems gemäß der vorliegenden Erfindung liegt darin, daß die Schärfentiefe verbessert ist und damit der Überwachungsbereich innerhalb des zu überwachenden Raumbereichs über den Boden oder den bodennahen Bereich hinaus auf den gesamten zu überwachenden Raum ausgedehnt werden kann.

Das komplexe Beleuchtungsmuster wird in den zu überwachenden Raum bzw. auf die darin befindlichen Objekte projiziert und von diesen reflektiert. Das reflektierte Licht wird von mindestens einem Bildgeber erfaßt, der dabei ein aus einer Anzahl von in einer Fläche angeordneten Bildpunkten enthaltendes Bild erzeugt und dieses an die Auswerteeinheit weiterleitet, die das vom Bildgeber erfaßte Bild mit einem Referenzbild vergleicht.

Dabei kann das Referenzbild beispielsweise dem Bild entsprechen, das vom Bildgeber des erfindungsgemäßen optoelektronischen Überwachungssystems empfangen wird, wenn der zu überwachende Raumbereich frei ist. Alternativ kann das Referenzbild auch dem Bild entsprechen, das vom Bildgeber empfangen wird, wenn sich in dem zu überwachenden Raumbereich Objekte befinden und diese eine vorgegebene Position einnehmen. Das Referenzbild kann in einem geeigneten Bildspeicher abgelegt sein, auf den die Auswerteeinheit zugreifen kann.

Der Vergleich zwischen dem Referenzbild und dem vom Bildgeber aktuell erfaßten Bild durch die Auswerteeinheit kann für jeden einzelnen Bildpunkt (Pixel) oder für eine Anzahl von Bildpunkten gemeinsam erfolgen. Wenn die Auswerteeinheit eine Abweichung zwischen dem Referenzbild und dem vom Bildgeber aktuell erfaßten Bild feststellt, so kann das Überwachungssystem gemäß der vorliegenden Erfindung ein entsprechendes Überwachungssignal ausgeben.

Das komplexe Beleuchtungsmuster mit mindestens einer zumindest teilweise von einer Geraden abweichenden Linie kann beispielsweise aus einer Kombination von geraden, geknickten und/oder gekrümmten Linien bestehen. Das komplexe Beleuchtungsmuster kann insbesondere eine oder mehrere nebeneinander angeordnete oder sich kreuzende Schlangenlinien, Spiralen, Liniengitter oder jede andere beliebige zweidimensionale geometrische Form mit mindestens einer zumindest teilweise von einer Geraden abweichenden Linie aufweisen. Durch die Beleuchtung des zu überwachenden Raumbereichs nach einem solchen komplexen Beleuchtungsmuster mit mindestens einer zumindest teilweise von einer Geraden abweichenden Linie kann eine Abweichung zwischen dem Referenzbild und dem aktuell erfaßten Bild eindeutiger festgestellt werden, als dies mit einer flächigen Ausleuchtung oder einer Beleuchtung mit einer einfachen geraden Linie möglich ist. Dadurch kann mit einem optoelektronischen Überwachungssystem gemäß der vorliegenden Erfindung die Anwesenheit von Objekten in dem zu überwachenden Raumbereich bzw. deren korrekte Position zuverlässiger festgestellt werden.

In den Unteransprüchen sind weitere vorteilhafte Ausführungsformen des optoelektronischen Überwachungssystems gemäß der vorliegenden Erfindung angegeben.

Bei einer vorteilhaften Ausführungsform des erfindungsgemäßen optoelektronischen Überwachungssystems wird als Beleuchtungseinrichtung eine Laserlichtquelle verwendet, die in der Lage ist, einen diskreten Lichtstrahl mit einer Breite von wenigen Millimetern zu erzeugen, der die Linie bildet, welche das komplexe Beleuchtungsmuster verwirklicht. Die Verwendung einer Laserlichtquelle als Beleuchtungseinrichtung hat den Vorteil, daß sie bereits einen hinreichend gebündelten Lichtstrahl aussendet, mit dem ein komplexes Beleuchtungsmuster erzeugt werden kann, ohne daß die Verwendung von Blenden oder aufwendigen optischen Strahlengängen erforderlich ist. Die Verwendung von Laserlicht hat ferner den Vorteil, daß dieses auch von konturschwachen Oberflächen in eindeutig detektierbarer Weise reflektiert wird.

In dem erfindungsgemäßen optoelektronischen Überwachungssystem wird der von der Beleuchtungseinrichtung erzeugte Lichtstrahl von einer optischen Ablenkeinheit insbesondere periodisch abgelenkt, um das durch die ungerade Linie verwirklichte komplexe Beleuchtungsmuster zu erzeugen. Dazu kann jede geeignete optische Ablenkeinheit verwendet werden, durch die ein Lichtstrahl insbesondere periodisch derart abgelenkt wird, daß ein komplexes Beleuchtungsmuster mit mindestens einer zumindest teilweise von einer Geraden abweichenden Linie entsteht.

Die optische Ablenkeinheit wird vorzugsweise so gesteuert, daß sie den von der Beleuchtungseinrichtung erzeugten Lichtstrahl in zwei zueinander senkrecht stehenden Ebenen ablenkt. Die Ablenkung des Lichtstrahls in zwei zueinander senkrecht stehenden Ebenen bietet besonders bei Verwendung einer Laserlichtquelle als Beleuchtungseinrichtung die Möglichkeit, jedes beliebige komplexe Beleuchtungsmuster, beispielsweise eine Kombination aus nebeneinander angeordneten oder sich kreuzenden Geraden, geknickten und/oder gekrümmten Linien, wie z.B. Schlangenlinien, Liniengitter, Spiralen oder jede andere zweidimensionale Form zu erzeugen.

Nach einer weiteren vorteilhaften Ausführungsform des erfindungsgemäßen Überwachungssystems kann auch nur ein bestimmter Raumwinkelbereich innerhalb des zu überwachenden Raumes nach einem komplexen Beleuchtungsmuster mit mindestens einer zumindest teilweise von einer Geraden abweichenden Linie beleuchtet werden. Dadurch wird der Vorteil erzielt, daß nicht der gesamte zu überwachende Raum, sondern nur ein bestimmter Raumwinkelbereich innerhalb dieses Raumes vom Überwachungssystem erfaßt wird, was durch die Anordnung entsprechender Blenden oder geeigneter optischer Ablenkeinheiten im Strahlengang der Beleuchtungseinrichtung erreicht werden kann. Auf diese Weise können Bereiche des Raumes, die keiner Kontrolle durch das Überwachungssystem unterzogen werden sollen, außer acht gelassen werden. Darüber hinaus kann so die von der Auswerteeinheit zu verarbeitende Datenmenge reduziert werden.

Es ist weiterhin von Vorteil, wenn die Beleuchtungseinrichtung des optoelektronischen Überwachungssystems gemäß der vorliegenden Erfindung im Pulsbetrieb betrieben wird, so daß die Beleuchtungseinrichtung nicht andauernd aktiviert sein muß. Im Pulsbetrieb sendet die Beleuchtungseinrichtung einen Lichtimpuls aus, der ausreichend ist, das gewünschte komplexe Beleuchtungsmuster vollständig zu erzeugen.

Der Pulsbetrieb der Beleuchtungseinrichtung ist vorzugsweise mit dem Bildgeber des erfindungsgemäßen Überwachungssystems synchronisiert, so daß der Bildgeber nur dann die reflektierten Lichtstrahlen empfängt, um daraus ein aus einer Anzahl von in einer Fläche angeordneten Bildpunkten enthaltendes Bild zu erzeugen, wenn die Beleuchtungseinrichtung aktiviert ist und einen Lichtimpuls aussendet. Dabei ist der von der Beleuchtungseinrichtung ausgesendete Lichtimpuls ausreichend, um das gewünschte Beleuchtungsmuster zumindest einmal vollständig zu erzeugen, so daß das für die Erzeugung des aktuell erfaßten Bildes verwendete Beleuchtungsmuster mit dem Beleuchtungsmuster, das dem Referenzbild zugrundeliegt, übereinstimmt. Der mit dem Bildgeber synchronisierte Pulsbetrieb der Beleuchtungseinrichtung des erfindungsgemäßen optoelektronischen Überwachungssystems hat ferner den Vorteil, daß die von der Auswerteeinheit zu verarbeitende Datenmenge verringert wird.

Nach einem weiteren Aspekt der vorliegenden Erfindung kann der Bildgeber des optoelektronischen Überwachungssystems mit einem Bandpaßfilter ausgestattet sein, der auf die Wellenlänge des von der Beleuchtungseinrichtung erzeugten Lichtes abgestimmt ist. Insbesondere bei Verwendung einer Laserlichtquelle als Beleuchtungseinrichtung, die Licht in einem bestimmten, eng begrenzten Wellenlängenbereich aussendet, kann der Bildgeber mit einem optischen Bandpaßfilter versehen sein, der ausschließlich Licht in dem Wellenlängenbereich passieren läßt, das von der Beleuchtungseinrichtung ausgestrahlt wird. Dadurch werden Beeinträchtigungen des vom Bildgeber erfaßten Bildes aufgrund von Fremdeinflüssen durch andere Lichtquellen als die Beleuchtungseinrichtung des Überwachungssystems oder sonstige störende Lichteffekte vermieden.

Das optoelektronische Überwachungssystem funktioniert besonders zuverlässig, da als Bildgeber eine digitale Kamera verwendet wird, die eine Anzahl von in einer Matrix angeordneten Halbleitersensoren, wie z.B. Photodioden, CCD- (Charge Coupled Device) oder CID- (Charge Injection Device) Matrizen, aufweist. Durch die Verwendung derartiger Kameras als Bildgeber können Abweichungen zwischen dem Referenzbild und dem aktuell erfaßten Bild aufgrund der Anwesenheit von Objekten in dem zu überwachenden Bereich besonders leicht detektiert werden, wie nachfolgend beschrieben wird. Dies ergibt sich insbesondere aus der vorteilhaften Kombination der Verwendung einer digitalen Kamera als Bildgeber und der Beleuchtung des zu überwachenden Raumbereichs nach einem bestimmten komplexen Beleuchtungsmuster, da die Halbleitersensoren der digitalen Kamera in einer Matrix flächig angeordnet sind und auf Veränderungen der Helligkeit besonders empfindlich reagieren.

Das in den zu überwachenden Raum projizierte bestimmte Beleuchtungsmuster wird reflektiert und erzeugt in der digitalen Kamera auf der Matrix der flächig angeordneten Halbleitersensoren ein bestimmtes Reflexionsbild, wobei vorzugsweise jedem einzelnen Bildpunkt ein bestimmter Helligkeitswert zugeordnet wird. Die Helligkeitswerte des aktuell erfaßten Bildes werden mit den Helligkeitswerten eines in einem Bildspeicher abgelegten Referenzbildes verglichen und auf Abweichungen hin überprüft.

Dieser Vergleich kann pixelweise, d.h. für jeden einzelnen Bildpunkt, erfolgen oder für eine Anzahl von zusammengefaßten Bildpunkten, indem die Summe der Helligkeitswerte einer Anzahl von benachbarten Bildpunkten des aktuell erfaßten Bildes addiert und mit der Summe der Helligkeitswerte der entsprechenden Bildpunkte des Referenzbildes verglichen werden.

Um geringfügige Abweichungen des aktuell erfaßten Bildes vom Referenzbild durch unwesentliche Veränderungen des zu überwachenden Raumes zu vernachlässigen, kann der Vergleich des aktuell erfaßten Bildes mit dem Referenzbild auch nur auf bestimmte Bildpunkte beschränkt werden, insbesondere auf diejenigen Bildpunkte, deren Helligkeitswert durch das Reflexionsbild des bestimmten Beleuchtungsmusters von den Helligkeitswerten anderer Bildpunkte deutlich unterscheiden.

Eine weitere Möglichkeit, die Empfindlichkeit des erfindungsgemäßen optoelektronischen Überwachungssystems einzustellen und damit Fehlinterpretationen zu vermeiden, besteht darin, der Auswerteeinheit für die Berechnung der Abweichung zwischen dem aktuell erfaßten Bild und dem Referenzbild einen Toleranzbereich zugrundezulegen, so daß das Überwachungssystem nur dann ein entsprechendes Überwachungssignal ausgibt, wenn dieser Toleranzbereich überschritten ist.

Nach einer weiteren vorteilhaften Ausführungsform der vorliegenden Erfindung kann der Bildgeber und die Beleuchtungseinrichtung des optoelektronischen Überwachungssystems in derselben Richtung auf den zu überwachenden Raumbereich ausgerichtet sein. Diese Möglichkeit ergibt sich daraus, daß der zu überwachende Raumbereich nach einem komplexen Beleuchtungsmuster mit mindestens einer zumindest teilweise von einer Geraden abweichenden Linie beleuchtet wird, so daß die Anwesenheit von Objekten im zu überwachenden Raumbereich jedenfalls eine deutliche Veränderung des Reflexionsbildes im Bildgeber des Überwachungssystems gegenüber einem ungestörten Strahlungsverlauf verursacht, selbst wenn der Bildgeber und die Beleuchtungseinrichtung in derselben Richtung auf den zu überwachenden Raumbereich ausgerichtet sind.

Aufgrund der Tatsache, daß nach der vorliegenden Erfindung der Bildgeber und die Beleuchungseinrichtung des optoelektronischen Überwachungssystems in derselben Richtung auf den zu überwachenden Raumbereich ausgerichtet sein können und dabei eine zuverlässige Fallunterscheidung zwischen einem unbeeinträchtigten Strahlenverlauf und einem veränderten Strahlenverlauf gewährleistet ist, kann nach einer weiteren bevorzugten Ausführungsform vorgesehen sein, daß der Bildgeber und die Beleuchtungseinrichtung gemeinsam in einem Gehäuse untergebracht sind. Dadurch wird das optoelektronische Überwachungssystem gemäß der vorliegenden Erfindung insgesamt kompakter, der Bildgeber und die Beleuchtungseinrichtung müssen nicht mehr in einem möglichst weiten Winkel separat voneinander montiert werden, was die Installation des Überwachungssystems erheblich vereinfacht, und es sind keine Verbindungsleitungen zwischen der Beleuchtungseinrichtung und dem Bildgeber mehr erforderlich.

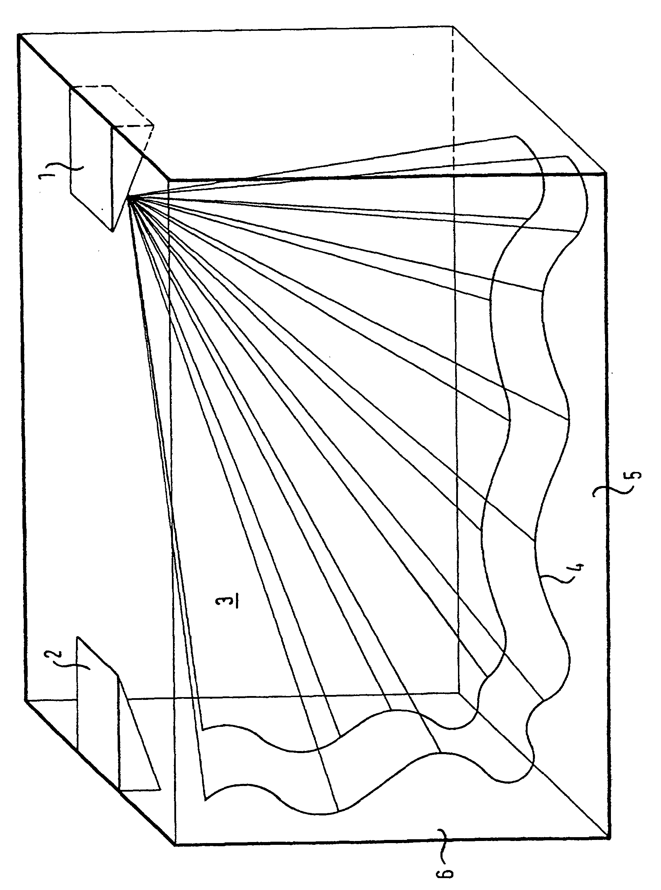

Anschließend wird die Funktionsweise eines optoelektronischen Überwachungssystems gemäß der vorliegenden Erfindung beispielhaft anhand der beigefügten Zeichnung erläutert. In der Zeichnung ist ein erfindunggemäßes optoelektronisches Überwachungssystem in einer bevorzugten Ausführungsform räumlich dargestellt.

Die einzige Figur der Zeichnung zeigt einen zu überwachenden Raumbereich 3, in dessen Deckenbereich sich eine Beleuchtungseinrichtung 1 sowie ein Bildgeber 2 befinden. In dem dargestellten Beispiel ist der Bildgeber 2 in dem Deckenbereich gegenüber der Beleuchtungseinrichtung 1 angeordnet. Die Beleuchtungseinrichtung 1 und der Bildgeber 2 können jedoch auch in einem anderen Positionsverhältnis zueinander angeordnet werden.

Die Beleuchtungseinrichtung 1 erzeugt eine aus Lichtpunkten gebildete Linie und beleuchtet den zu überwachenden Raumbereich 3 nach einem komplexen Beleuchtungsmuster mit mindestens einer zumindest teilweise von einer Geraden abweichenden Linie 4. Zur Erzeugung des komplexen Beleuchtungsmusters können geeignete Blenden (nicht gezeigt) in den Strahlengang der Beleuchtungseinrichtung eingeführt sein. Gemäß der Erfindung lenkt eine optische Ablenkeinheit (nicht gezeigt) den Lichtstrahl insbesondere in zwei zueinander senkrecht stehenden Ebenen ab. Auf diese Weise kann ein komplexes Beleuchtungsmuster in jeder beliebigen zweidimensionalen Form erzeugt werden, beispielsweise eine Kombination aus nebeneinander angeordneten oder sich kreuzenden Geraden, geknickten und/oder gekrümmten Linien, wie z.B. Schlangenlinien, Liniengitter oder Spiralen.

In dem dargestellten Ausführungsbeispiel handelt es sich bei dem Beleuchtungsmuster um zwei nebeneinander angeordnete Schlangenlinien 4. Das Beleuchtungsmuster wird derart in den zu überwachenden Raumbereich 3 projiziert, daß es diesen möglichst vollständig abdeckt. In dem dargestellten Fall ist der zu überwachende Raumbereich 3 frei, so daß das Beleuchtungsmuster ungehindert auf den Boden 5 und die Seitenwände 6 des zu überwachenden Raumbereichs 3 projiziert wird.

Das in den zu überwachenden Raumbereich 3 projizierte Beleuchtungsmuster wird vom Boden 5 und den Seitenwänden 6 des zu überwachenden Raumbereichs 3 oder von darin befindlichen Objekten (nicht gezeigt) reflektiert und vom Bildgeber 2 erfaßt, der dabei ein aus einer Anzahl von in einer Fläche angeordneten Bildpunkten enthaltendes Bild erzeugt. In der dargestellten Situation bei freiem zu überwachendem Raumbereich kann ein Referenzbild erzeugt werden, das vom Bildgeber 2 erfaßt wird und in einem geeigneten Bildspeicher (nicht gezeigt) zum späteren Vergleich gespeichert wird.

Wenn sich nun in den zu überwachenden Raumbereich 3 eine Person oder ein sonstiges Objekt befindet, wird das Reflexionsbild des in den zu überwachenden Raumbereich 3 projizierten Beleuchtungsmusters verändert und durch den Bildgeber 2 erfaßt. Das vom Bildgeber 2 aktuell erfaßte Bild wird durch eine Auswerteeinheit (nicht gezeigt) mit dem gespeicherten Referenzbild verglichen. Wenn die Auswerteeinheit Abweichungen zwischen dem vom Bildgeber 2 aktuell erfaßten Bild und dem gespeicherten Referenzbild feststellt, kann das optoelektronische Überwachungssystem ein entsprechendes Überwachungssignal ausgeben.

Alternativ kann das Referenzbild einem Bild entsprechen, das vom Bildgeber 2 des erfindungsgemäßen optoelektronischen Überwachungssystems empfangen wird, wenn in dem zu überwachenden Raumbereich 3 befindliche Objekte eine vorgegebene Position einnehmen. Eine Abweichung zwischen einem derart erzeugten Referenzbild gegenüber einem durch den Bildgeber 2 aktuell erfaßten Bild gibt dann einen Hinweis darauf, daß die in dem zu überwachenden Raumbereich 3 befindlichen Objekte ihre ursprüngliche Position verändert haben, woraufhin das optoelektronische Überwachungssystem ein entsprechendes Überwachungssignal ausgeben kann.

Aufgrund des Beleuchtungsmusters mit mindestens einer zumindest teilweise von einer Geraden abweichenden Linie ist folglich eine eindeutige Fallunterscheidung möglich, ob der zu überwachende Raumbereich 3 frei ist oder sich Objekte darin befinden bzw. diese ihre Position gegenüber einer ursprünglichen Position verändert haben, da auch konturschwache Oberflächen oder ebene Gegenstände eine signifikante Veränderung des Reflexionsbildes des in den zu überwachenden Raumbereich 3 projizierten komplexen Beleuchtungsmusters hervorrufen.

Die Beleuchtung des zu überwachenden Raumbereichs nach einem komplexen Beleuchtungsmuster mit mindestens einer zumindest teilweise von einer Geraden abweichenden Linie 4 erlaubt es deshalb auch, den Bildgeber 2 und die Beleuchtungseinrichtung 1 in derselben Richtung auf den zu überwachenden Raumbereich 3 auszurichten. Nach einer bevorzugten Ausführungsform kann deshalb ein optoelektronisches Überwachungssystem gemäß der Erfindung derart ausgestaltet sein, daß der Bildgeber 2 und die Beleuchtungseinrichtung 1 gemeinsam in einem Gehäuse untergebracht sind. Auf diese Weise sind keine Verbindungsleitungen zwischen der Beleuchtungseinrichtung 1 und dem Bildgeber 2 mehr erforderlich, der Platzbedarf ist verringert und die Installation vereinfacht, während die Zuverlässigkeit der Überprüfung eines zu überwachenden Raumbereichs 3 auf die Anwesenheit oder die korrekte Position von Objekten verbessert ist.

### Liste der Bezugszeichen

- 1: Beleuchtungseinrichtung
- 2: Bildgeber
- 3: überwachter Raumbereich
- 4: Projektion des Beluchtungsmusters
- 5: Boden des überwachten Raumbereichs 3
- 6: Seitenwand des überwachten Raumbereichs 3

## Patentansprüche

1. Optoelektronisches Überwachungssystem zur Erfassung eines Boden und Seitenwände aufweisenden, zu überwachenden Raumbereiches (3) mit einer gepulsten Beleuchtungseinrichtung (1), die einen Lichtstrahl erzeugt, einer optischen Ablenkeinheit, die den von der Beleuchtungseinheit (1) erzeugten Lichtstrahl insbesondere periodisch ablenkt, um ein komplexes Beleuchtungsmuster mit mindestens einer zumindest teilweise von einer Geraden abweichenden am Boden und/oder den Seitenwänden aus Lichtpunkten gebildeten Linie, insbesondere sich kreuzenden, geknickten und/oder gekrümmten Linien, wie z.B. Schlangenlinien, Liniengitter, Spiralen, zu erzeugen, einem Bildgeber (2), der das von der Linie reflektierte Licht empfängt, und einer Auswerteeinheit, die das vom Bildgeber (2) erfasste Bild mit einem Referenzbild vergleicht,
wobei die Beleuchtungseinrichtung (1) den zu überwachenden Raumbereich nach dem komplexen Beleuchtungsmuster beleuchtet und der Bildgeber (2) eine digitalen Kamera ist, die eine Anzahl von in einer Matrix angeordneten Halbleitersensoren, wie z.B. Photodioden-, CCD- oder CID-Matrizen aufweist, wobei die Auswerteeinheit den Helligkeitswert mindestens eines Bildpunktes des vom Bildgeber (2) erfassten Bildes mit dem Helligkeitswert des entsprechenden Bildpunktes des Referenzbildes vergleicht oder die Summe der Helligkeitswerte einer Anzahl von Bildpunkten des vom Bildgeber (2) erfassten Bildes mit der Summe der Helligkeitswerte der entsprechenden Bildpunkte des Referenzbildes vergleicht.

2. Optoelektronisches Überwachungssystem nach Anspruch 1,
**dadurch gekennzeichnet,**
**dass** die Beleuchtungseinrichtung (1) eine Laserlichtquelle ist, die einen diskreten Lichtstrahl erzeugt, der die Linie (4) bildet.

3. Optoelektronisches Überwachungssystem nach Anspruch 1,
**dadurch gekennzeichnet,**
**dass** die optische Ablenkeinheit den von der Beleuchtungseinrichtung (1) erzeugten Lichtstrahl insbesondere in zwei zueinander senkrecht stehenden Ebenen ablenkt.

4. Optoelektronisches Überwachungssystem nach einem der vorangehenden Ansprüche,
**dadurch gekennzeichnet,**
**dass** die Beleuchtungseinrichtung (1) den zu überwachenden Raum (3) nur in einem bestimmten Raumwinkelbereich beleuchtet.

5. Optoelektronisches Überwachungssystem nach einem der vorangehenden Ansprüche,
**dadurch gekennzeichnet,**
**dass** die gepulste Beleuchtungseinrichtung (1) mit dem Bildgeber (2) synchronisiert ist.

6. Optoelektronisches Überwachungssystem nach einem der vorangehenden Ansprüche,
**dadurch gekennzeichnet,**
**dass** der Bildgeber (2) einen optischen Bandpassfilter aufweist, der auf die Wellenlänge des von der Beleuchtungseinrichtung (1) erzeugten Lichtes abgestimmt ist.

7. Optoelektronisches Überwachungssystem nach einem der vorangehenden Ansprüche,
**dadurch gekennzeichnet,**
**dass** das Referenzbild bei freiem zu überwachenden Raumbereich (3) erzeugt wird.

8. Optoelektronisches Überwachungssystem nach einem der vorangehenden Ansprüche,
**dadurch gekennzeichnet,**
**dass** das Referenzbild erzeugt wird, während in dem zu überwachenden Raumbereich (3) befindliche Objekte eine vorgegebene Position einnehmen.

9. Optoelektronisches Überwachungssystem nach einem der vorangehenden Ansprüche,
**dadurch gekennzeichnet,**
**dass** der Bildgeber (2) und die Beleuchtungseinrichtung (1) in derselben Richtung auf den zu überwachenden Raumbereich (3) ausgerichtet sind.

10. Optoelektronisches Überwachungssystem nach einem der vorangehenden Ansprüche,
**dadurch gekennzeichnet,**
**dass** der Bildgeber (2) und die Beleuchtungseinrichtung (1) gemeinsam in einem Gehäuse untergebracht sind.

## Claims

1. An optoelectronic monitoring system for the detection of a spatial region (3) to be monitored having a base and side walls, comprising a pulsed lighting device (1) which generates a light beam, an optical deflection unit which deflects, in particular periodically deflects, the light beam generated by the lighting unit (1) to generate a complex illumination pattern having at least one line formed from light spots on the base and/or on the side walls and deviating at least partly from a straight line, in particular crossing, kinked and/or curved lines such as wavy lines, line grids or spirals, an imager (2) which receives the light reflected by the line and an evaluation unit which compares the image detected by the imager (2) with a reference image,
wherein the lighting device (1) illuminates the spatial region (3) to be monitored in accordance with the complex illumination pattern and the imager (2) is a digital camera which has a number of semiconductor sensors such as photodiode matrices, CCD matrices or CID matrices arranged in a matrix, with the evaluation unit comparing the brightness value of at least one picture element of the image detected by the imager (2) with the brightness value of the corresponding picture element of the reference image or comparing the sum of the brightness values of a number of picture elements of the image detected by the imager (2) with the sum of the brightness values of the corresponding picture elements of the reference image.

2. An optoelectronic monitoring system in accordance with claim 1, **characterised in that** the lighting device (1) is a laser light source which generates a discrete light beam which forms the line (4).

3. An optoelectronic monitoring system in accordance with claim 1, **characterised in that** the optical deflection unit deflects the light beam generated by the lighting device (1) in particular into two planes perpendicular to one another.

4. An optoelectronic monitoring system in accordance with any one of the preceding claims, **characterised in that** the lighting device (1) illuminates the space (3) to be monitored only in a specific solid angle range.

5. An optoelectronic monitoring system in accordance with any one of the preceding claims, **characterised in that** the pulsed lighting device (1) is synchronised with the imager (2).

6. An optoelectronic monitoring system in accordance with any one of the preceding claims, **characterised in that** the imager (2) has an optical band pass filter which is matched to the wavelength of the light generated by the lighting device (1).

7. An optoelectronic monitoring system in accordance with any one of the preceding claims, **characterised in that** the reference image is generated when a spatial region (3) to be monitored is free.

8. An optoelectronic monitoring system in accordance with any one of the preceding claims, **characterised in that** the reference image is generated while objects located in the spatial region (3) to be monitored adopt a pre-determined position.

9. An optoelectronic monitoring system in accordance with any one of the preceding claims, **characterised in that** the imager (2) and the lighting device (1) are aligned in the same direction to the spatial region (3) to be monitored.

10. An optoelectronic monitoring system in accordance with any one of the preceding claims, **characterised in that** the imager (2) and the lighting device (1) are jointly accommodated in a housing.

## Revendications

1. Système de surveillance optoélectronique pour la détection d'une zone de pièce (3) à surveiller comprenant un sol et des cloisons avec une installation d'éclairage (1) à impulsions qui produit un rayon lumineux, avec une unité de déviation optique qui dévie en particulier périodiquement le rayon lumineux produit par l'unité d'éclairage (1), afin de produire un motif d'éclairage complexe avec au moins une ligne formée de points lumineux sur le sol et/ou les cloisons déviant au moins partiellement d'une droite, en particulier des lignes se croisant, courbées et/ou incurvées, telles que par exemple des lignes sinueuses, des réseaux linéaires, des spirales, avec un émetteur d'image (2) qui reçoit la lumière réfléchie par la ligne, et une unité d'évaluation qui compare l'image détectée par l'émetteur d'image (2) à une image de référence,
sachant que l'installation d'éclairage (1) éclaire la zone de pièce à surveiller selon le motif d'éclairage complexe, et l'émetteur d'image (2) est une caméra numérique qui comprend un nombre de capteurs semi-conducteurs disposés dans une matrice, telle que par exemple des matrices à photodiodes, CCD ou CID, moyennant quoi l'unité d'évaluation compare le niveau de luminosité d'au moins un point d'image de l'image détectée par l'émetteur d'image (2) au niveau de luminosité du point d'image correspondant de l'image de référence, ou compare la somme des niveaux de luminosité d'un nombre de points d'image de l'image détectée par l'émetteur d'image (2) à la somme des niveaux de luminosité des points d'image correspondants de l'image de référence.

2. Système de surveillance optoélectronique selon la revendication 1
**caractérisé en ce que**,
l'installation d'éclairage (1) est une source de lumière laser qui produit un rayon lumineux discret formant la ligne (4).

3. Système de surveillance optoélectronique selon la revendication 1,
**caractérisé en ce que**,
l'unité de déviation optique dévie le rayon lumineux produit par l'installation d'éclairage (1) en particulier en deux plans perpendiculaires l'un à l'autre.

4. Système de surveillance optoélectronique selon l'une des revendications précédentes,
**caractérisé en ce que**,
l'installation d'éclairage (1) éclaire la pièce (3) à surveiller seulement dans une zone angulaire définie de la pièce.

5. Système de surveillance optoélectronique selon l'une des revendications précédentes,
**caractérisé en ce que**,
l'installation d'éclairage (1) à impulsions est synchronisée avec l'émetteur d'image (2).

6. Système de surveillance optoélectronique selon l'une des revendications précédentes,
**caractérisé en ce que**,
l'émetteur d'image (2) comprend un filtre passe-bande optique qui est ajusté sur la longueur d'ondes de la lumière produite par l'installation d'éclairage (1).

7. Système de surveillance optoélectronique selon l'une des revendications précédentes,
**caractérisé en ce que**,
l'image de référence est produite pour une zone libre de pièce (3) à surveiller.

8. Système de surveillance optoélectronique selon l'une des revendications précédentes,
**caractérisé en ce que**,
l'image de référence est produite alors que des objets se trouvant dans la zone de pièce (3) à surveiller se trouvent dans une position prédéterminée.

9. Système de surveillance optoélectronique selon l'une des revendications précédentes,
**caractérisé en ce que**,
l'émetteur d'image (2) et l'installation d'éclairage (1) sont orientés dans la même direction vers la zone de pièce (3) à surveiller.

10. Système de surveillance optoélectronique selon l'une des revendications précédentes,
**caractérisé en ce que**,
l'émetteur d'image (2) et l'installation d'éclairage (1) sont logés ensemble dans un boîtier.
